# EUROPEAN PATENT APPLICATION

(11) **EP 4 424 747 A2**
(43) Date of publication of application: **04.09.2024**
(21) Application number: 24162209.1
(22) Date of filing: 07.03.2024
(51) Int. Cl.: C08G 69/40, D01D 5/06, D01D 5/12, D01F 6/80

(54) **BIO-BASED POLYAMIDE FIBER AND PREPARATION METHOD THEREOF**

(30) Priority: 29.08.2023 CN 202311092999
(71) Applicant: Tayho Advanced Materials Group Co., Ltd., Yantai, Shandong 264006 (CN)
(72) Inventor: SONG, Xiquan, Yantai, 264006 (CN); LV, Jiping, Yantai, 264006 (CN); MA, Qianli, Yantai, 264006 (CN); LENG, Xiangyang, Yantai, 264006 (CN); MU, Shaowei, Yantai, 264006 (CN)
(74) Representative: JD&P Patent Attorneys Joanna Dargiewicz & Partners

(57) **Abstract**

The present disclosure relates to the technical field of bio-based polyamide fibers, and specifically relates to a bio-based polyamide fiber and a preparation method thereof. The preparation method includes: S1: under protection of an inert gas, dissolving p-phenylenediamine and a heterocyclic diamine in a polar solvent, adding furandicarbonyl chloride to allow a polymerization reaction to obtain a polymerization system, and adjusting a pH of the polymerization system to slightly higher than 7.0 to obtain a bio-based polyamide polymer solution; and S2: subjecting the bio-based polyamide polymer solution to wet spinning to obtain the bio-based polyamide fiber. The heterocyclic diamine is at least one selected from the group consisting of 2,3-diaminopyridine, 2,5-diaminopyridine, and 2,6-diaminopyridine. The polar solvent is selected from the group consisting of N,N-dimethylformamide (DMF), N,N-dimethylacetamide (DMAC), N-methylpyrrolidone (NMP), and dimethyl sulfoxide (DMSO). The bio-based polyamide fiber has intrinsic flame-retardant performance, a high strength, and excellent post-dyeing performance.

## Description

### TECHNICAL FIELD

The present disclosure relates to a bio-based polyamide fiber and a preparation method thereof, and belongs to the technical field of bio-based polyamide fibers.

### BACKGROUND

Aromatic polyamides, such as meta-aramid and para-aramid, have excellent intrinsic flame-retardant performance and high mechanical strength, and are widely used in flame-retardant protective materials, high-temperature filter materials, aerospace, honeycomb structures, and skeleton reinforcement materials. However, para-aramid exhibits a low solubility in a solvent, and thus a large amount of concentrated sulfuric acid is required in a spinning process of para-aramid, which results in poor operation safety and poor post-dyeing performance of fibers.

With the increasing consumption of fossil energy, non-renewable fossil energy will eventually be exhausted. However, bio-based raw materials are derived from biomasses, which are inexhaustible and renewable. The development and use of bio-based polyamide fibers in the fiber industry is also of great significance.

Chinese patent application CN112745499A discloses a method for preparing a transparent polyamide polymer and a fiber based on a bio-based modifier, including: a bio-based modifier of furandicarboxylic acid and a derivative thereof and a permeabilizing agent are subjected to polymerization with cyclodiamine, and a resulting polymerization system is cured under specified conditions to obtain the transparent polyamide polymer. However, the fiber has a relatively-low strength, and is mainly characterized by its transparency. Chinese patent application CN116575138A discloses a preparation method of a bio-based aromatic polyamide fiber, including: a dibasic acid with a furan ring structure is directly subjected to polycondensation with an aromatic diamine through solution polymerization to produce a polymerization stock solution, and then the polymerization stock solution is directly subjected to wet spinning to produce a fiber sample with excellent flexibility, high water absorption, and easy dyeing. However, the fiber also has a relatively-low strength, and can be dyed only by a cationic dye to some degree.

### SUMMARY OF PRESENT INVENTION

In view of the deficiencies of the prior art, the present disclosure provides a bio-based polyamide fiber and a preparation method thereof. The bio-based polyamide fiber has intrinsic flame-retardant performance, a high strength, and excellent post-dyeing performance.

The present disclosure adopts the following technical solutions to solve the above-mentioned technical problem: The present disclosure provides a bio-based polyamide fiber, where a polymer in the bio-based polyamide fiber has a general structural formula of 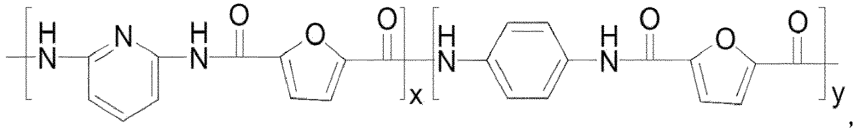 where 140 ≤ x ≤ 200 and 280 ≤ y ≤ 350; and the polymer has a total molecular weight of 1100,00 to 150,000 and a molecular weight distribution of 1.1 to 1.3.

In one embodiment, the bio-based polyamide fiber has a tensile strength of 15 cN/dtex to 20 cN/dtex, an elongation at break of 9% to 11%, and a filament number of 2.0 dtex to 2.5 dtex.

The present disclosure also provides a method for preparing a bio-based polyamide fiber, including:
S1: under protection of an inert gas, dissolving p-phenylenediamine and a heterocyclic diamine in a polar solvent, adding furandicarbonyl chloride to allow a polymerization reaction to obtain a polymerization system, and adjusting a pH of the polymerization system to slightly higher than 7.0 to obtain a bio-based polyamide polymer solution; and
S2: subjecting the bio-based polyamide polymer solution to wet spinning to obtain the bio-based polyamide fiber.

In one embodiment, the heterocyclic diamine is at least one selected from the group consisting of 2,3-diaminopyridine, 2,5-diaminopyridine, and 2,6-diaminopyridine.

Preferably, the heterocyclic diamine is 2,6-diaminopyridine.

In one embodiment, the polar solvent is selected from the group consisting of N,N-dimethylformamide (DMF), N,N-dimethylacetamide (DMAC), N-methylpyrrolidone (NMP), and dimethyl sulfoxide (DMSO).

Further, a molar ratio of the p-phenylenediamine to the heterocyclic diamine is 1:(0.5-1); and a ratio of a total mole number of the p-phenylenediamine and the heterocyclic diamine to a mole number of the furandicarbonyl chloride is 1:(0.9-1.3).

In one embodiment, when the p-phenylenediamine and the heterocyclic diamine are dissolved in the polar solvent, a dissolution temperature is controlled at 40°C to 60°C; and the polymerization reaction is conducted at 0°C to 5°C.

In one embodiment, the bio-based polyamide polymer solution has a polymer concentration of 17 wt% to 34 wt%, a viscosity of 800 Po to 1,500 Po, and a pH of 8 to 10.

In one embodiment, the wet spinning adopts a two-stage stretching bath mode; stretch ratios in a first-stage stretching bath and a second-stage stretching bath are 1.2 to 1.5 and 3.0 to 3.3, respectively, and a total stretch ratio in the first-stage stretching bath and the second-stage stretching bath is 3.8 to 4.5;
the first-stage stretching bath and the second-stage stretching bath both are a polar solvent-containing aqueous solution; the first-stage stretching bath is a polar solvent-containing aqueous solution with a mass concentration of 55% to 60%, and the second-stage stretching bath is a polar solvent-containing aqueous solution with a mass concentration of 30% to 35%; and a concentration difference between the first-stage stretching bath and the second-stage stretching bath is 20% to 25%.

In one embodiment, during the wet spinning, a spinning speed is 35 m/min to 50 m/min, a hot stretching temperature is 360°C to 400°C, and a stretch ratio is 1.5 to 1.8.

The present disclosure has following beneficial effects:

The bio-based polyamide fiber of the present disclosure is a novel intrinsically flame-retardant material. In the present disclosure, a bio-based polyamide polymer is prepared through a reaction of p-phenylenediamine and a heterocyclic diamine with furandicarbonyl chloride. The heterocyclic diamine monomer is introduced to reduce the strong rigidity of a molecular chain caused by the p-phenylenediamine and improve the solubility of the polymer in a solvent, which solves the problem that the existing polymers exhibit a poor solubility in a solvent. The introduction of the heterocyclic diamine can improve the flexibility of a molecular chain and allows an excellent post-dyeing effect for the fiber. In addition, a furan ring is a five-membered ring, and a polymer molecular chain prepared with a furan ring exhibits better flexibility than a polymer molecular chain prepared through polymerization of an aromatic monomer. Thus, an aromatic polyamide that can be prepared with a furan ring has both excellent performance and excellent post-dyeing performance. Because a lone pair of electrons of an oxygen atom in a furan-based monomer molecule form a large π bond in a conjugated orbital plane, there are a total of 6 electrons in the conjugated plane, which is in line with a 4 n + 2 structure. Thus, furan has aromaticity, and a polymer prepared with furan has intrinsic flame-retardant performance.

In the preparation method of a bio-based polyamide fiber in the present disclosure, the introduction of the p-phenylenediamine monomer improves the rigidity of a molecular chain to improve a strength of the fiber, but makes a polymer have poor solubility. Thus, an appropriate amount of a pyridine diamine is added to improve the solubility of the polymer, and a pyridine ring can form an amido bond with a polymer chain to produce hydrogen bonding, thereby improving a strength of the bio-based polyamide fiber.

In the preparation method of a bio-based polyamide fiber in the present disclosure, a two-stage stretching bath mode is adopted, where a first-stage stretching bath has a high concentration and a low stretch ratio. During slow stretching in the first-stage stretching bath, a solvent in a fiber is slowly released to improve the compactness of the fiber and prevent the formation of a skin-core structure affecting a strength of the fiber. An appropriate concentration difference is set between the first-stage stretching bath and a second-stage stretching bath, which is conducive to controlling a release rate of a solvent in a fiber to finally obtain an aramid-like polyamide fiber with a high strength, intrinsic flame-retardant performance, and an excellent post-dyeing effect.

### DETAILED DESCRIPTION OF THE EMBODIMENTS

The specific embodiments of the present disclosure will be described below in detail. The present disclosure can be implemented in many other ways other than those described herein, and those skilled in the art can make similar improvements without departing from the connotation of the present disclosure. Thus, the present disclosure is not limited to the specific embodiments disclosed below.

Unless otherwise defined, all technical and scientific terms used herein have the same meanings as commonly understood by those skilled in the technical field of the present disclosure. Terms used herein are intended to merely describe specific embodiments, rather than limit the present disclosure.

The present disclosure provides a bio-based polyamide fiber, where a polymer in the bio-based polyamide fiber has a general structural formula of 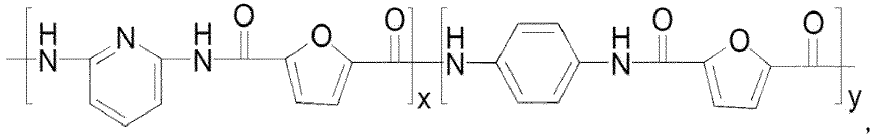 where 140 ≤ x ≤ 200 and 280 ≤ y ≤ 350; and the polymer has a total molecular weight of 110,000 to 150,000 and a molecular weight distribution of 1.1 to 1.3.

Specifically, the bio-based polyamide fiber has a tensile strength of 15 cN/dtex to 20 cN/dtex, an elongation at break of 9% to 11%, and a filament number of 2.0 dtex to 2.5 dtex.

The present disclosure provides a method for preparing a bio-based polyamide fiber, including the following steps.

S1: under protection of an inert gas, p-phenylenediamine and a heterocyclic diamine are dissolved in a polar solvent, furandicarbonyl chloride is added to allow a polymerization reaction to obtain a polymerization system, and a pH of the polymerization system is adjusted to slightly higher than 7.0 to obtain a bio-based polyamide polymer solution.

S2: the bio-based polyamide polymer solution is subjected to wet spinning to obtain the bio-based polyamide fiber.

Specifically, the heterocyclic diamine is at least one selected from the group consisting of 2,3-diaminopyridine, 2,5-diaminopyridine, and 2,6-diaminopyridine.

More specifically, the heterocyclic diamine is 2,6-diaminopyridine.

Specifically, the polar solvent is selected from the group consisting of DMF, DMAC, NMP, and DMSO.

Specifically, a molar ratio of the p-phenylenediamine to the heterocyclic diamine is 1:(0.5-1); and a ratio of a total mole number of the p-phenylenediamine and the heterocyclic diamine to a mole number of the furandicarbonyl chloride is 1:(0.9-1.3).

Specifically, when the p-phenylenediamine and the heterocyclic diamine are dissolved in the polar solvent, a dissolution temperature is controlled at 40°C to 60°C; and the polymerization reaction is conducted at 0°C to 5°C.

Specifically, in the S1, the furandicarbonyl chloride is added in batches to a polymerization reaction system, which can control a temperature of the polymerization stock solution, reduce the occurrence of side reactions, improve the homogeneity of the polymerization stock solution, and improve a strength of the fiber.

Specifically, the bio-based polyamide polymer solution has a polymer concentration of 17 wt% to 34 wt%, a viscosity of 800 Po to 1,500 Po, and a pH of 8 to 10.

Specifically, a substance for adjusting the pH is any one selected from the group consisting of an alkaline earth metal hydroxide and an organic amine, and the alkaline earth metal hydroxide is sodium hydroxide or calcium hydroxide, but is not limited to these two.

Specifically, the wet spinning adopts a two-stage stretching bath mode; stretch ratios in a first-stage stretching bath and a second-stage stretching bath are 1.2 to 1.5 and 3.0 to 3.3, respectively, and a total stretch ratio in the first-stage stretching bath and the second-stage stretching bath is 3.8 to 4.5.

The first-stage stretching bath and the second-stage stretching bath both are a polar solvent-containing aqueous solution; the first-stage stretching bath is a polar solvent-containing aqueous solution with a mass concentration of 55% to 60%, and the second-stage stretching bath is a polar solvent-containing aqueous solution with a mass concentration of 30% to 35%; and a concentration difference between the first-stage stretching bath and the second-stage stretching bath is 20% to 25%.

Specifically, during the wet spinning, a spinning speed is 35 m/min to 50 m/min, a hot stretching temperature is 360°C to 400°C, and a stretch ratio is 1.5 to 1.8.

The wet spinning is as follows: the bio-based polyamide polymer is cured, drafted, washed with water, oven-dried, heat-set, crimped, oiled, and cut off to obtain the bio-based polyamide fiber.

### Example 1

(1) p-phenylenediamine was added to NMP to obtain a first mixture, nitrogen was introduced for protection, and the first mixture was stirred for 1 h at a dissolution temperature of 40°C. 2,6-diaminopyridine was added to obtain a second mixture, and the second mixture was stirred for dissolution. Then furandicarbonyl chloride was added in three batches to allow a reaction at 1°C to obtain a reaction system, where the p-phenylenediamine, the 2,6-diaminopyridine, and the furandicarbonyl chloride were in a molar ratio of 1 :0.5:1.35.
   A pH of the reaction system was adjusted with calcium hydroxide to 8.2 to obtain a bio-based polyamide polymer solution with a solid content of 17% and a viscosity of 873 Po (25°C).
(2) The bio-based polyamide polymer solution was subjected to wet spinning as follows: a bio-based polyamide polymer was cured, drafted, washed with water, oven-dried, heat-set, crimped, oiled, and cut off to obtain a bio-based polyamide fiber.

A specific process was as follows: A curing bath was an NMP aqueous solution in which a mass concentration of NMP was 70% to 75%. A two-stage stretching bath mode was adopted, where a first-stage stretching bath and a second-stage stretching bath both were an NMP aqueous solution; the first-stage stretching bath had an NMP mass concentration of 55% and a stretch ratio of 1.2, the second-stage stretching bath had an NMP mass concentration of 30% and a stretch ratio of 3.3, and a total stretch ratio in the first-stage stretching bath and the second-stage stretching bath was 3.96. A spinning speed was 35 m/min, a hot stretching temperature was 360°C, and a stretch ratio was 1.5.

### Example 2

(1) p-phenylenediamine was added to DMAC to obtain a first mixture, nitrogen was introduced for protection, and the first mixture was stirred for 1 h at a dissolution temperature of 45°C. 2,6-diaminopyridine was added to obtain a second mixture, and the second mixture was stirred for dissolution. Then furandicarbonyl chloride was added in three batches to allow a reaction at 2°C to obtain a reaction system, where the p-phenylenediamine, the 2,6-diaminopyridine, and the furandicarbonyl chloride were in a molar ratio of 1 :0.6:1.95.
   A pH of the reaction system was adjusted with sodium hydroxide to 9.3 to obtain a bio-based polyamide polymer solution with a solid content of 19% and a viscosity of 1,278 Po (25°C).
(2) The bio-based polyamide polymer solution was subjected to wet spinning as follows: a bio-based polyamide polymer was cured, drafted, washed with water, oven-dried, heat-set, crimped, oiled, and cut off to obtain a bio-based polyamide fiber.

A specific process was as follows: A curing bath was a DMAC aqueous solution in which a mass concentration of DMAC was 70% to 75%. A two-stage stretching bath mode was adopted, where a first-stage stretching bath and a second-stage stretching bath both were a DMAC aqueous solution; the first-stage stretching bath had a DMAC mass concentration of 56% and a stretch ratio of 1.4, the second-stage stretching bath had a DMAC mass concentration of 31% and a stretch ratio of 3.2, and a total stretch ratio in the first-stage stretching bath and the second-stage stretching bath was 4.48. A spinning speed was 38 m/min, a hot stretching temperature was 370°C, and a stretch ratio was 1.6.

### Example 3

(1) p-phenylenediamine was added to DMF to obtain a first mixture, nitrogen was introduced for protection, and the first mixture was stirred for 1 h at a dissolution temperature of 50°C. 2,6-diaminopyridine was added to obtain a second mixture, and the second mixture was stirred for dissolution. Then furandicarbonyl chloride was added in three batches to allow a reaction at 3°C to obtain a reaction system, where the p-phenylenediamine, the 2,6-diaminopyridine, and the furandicarbonyl chloride were in a molar ratio of 1 :0.7:1.87.
   A pH of the reaction system was adjusted with sodium hydroxide to 10.0 to obtain a bio-based polyamide polymer solution with a solid content of 20% and a viscosity of 1,409 Po (25°C).
(2) The bio-based polyamide polymer solution was subjected to wet spinning as follows: a bio-based polyamide polymer was cured, drafted, washed with water, oven-dried, heat-set, crimped, oiled, and cut off to obtain a bio-based polyamide fiber.

A specific process was as follows: A curing bath was a DMAC aqueous solution in which a mass concentration of DMAC was 70% to 75%. A two-stage stretching bath mode was adopted, where a first-stage stretching bath and a second-stage stretching bath both were a DMAC aqueous solution; the first-stage stretching bath had a DMAC mass concentration of 57% and a stretch ratio of 1.3, the second-stage stretching bath had a DMAC mass concentration of 32% and a stretch ratio of 3.1, and a total stretch ratio in the first-stage stretching bath and the second-stage stretching bath was 4.03. A spinning speed was 41 m/min, a hot stretching temperature was 380°C, and a stretch ratio was 1.7.

### Example 4

(1) p-phenylenediamine was added to DMSO to obtain a first mixture, nitrogen was introduced for protection, and the first mixture was stirred for 1 h at a dissolution temperature of 55°C. 2,6-diaminopyridine was added to obtain a second mixture, and the second mixture was stirred for dissolution. Then furandicarbonyl chloride was added in three batches to allow a reaction at 3°C to obtain a reaction system, where the p-phenylenediamine, the 2,6-diaminopyridine, and the furandicarbonyl chloride were in a molar ratio of 1 :0.8:2.16.
   A pH of the reaction system was adjusted with calcium hydroxide to 9.1 to obtain a bio-based polyamide polymer solution with a solid content of 21% and a viscosity of 1,389 Po (25°C).
(2) The bio-based polyamide polymer solution was subjected to wet spinning as follows: a bio-based polyamide polymer was cured, drafted, washed with water, oven-dried, heat-set, crimped, oiled, and cut off to obtain a bio-based polyamide fiber.

A specific process was as follows: A curing bath was a DMSO aqueous solution in which a mass concentration of DMSO was 70% to 75%. A two-stage stretching bath mode was adopted, where a first-stage stretching bath and a second-stage stretching bath both were a DMSO aqueous solution; the first-stage stretching bath had a DMSO mass concentration of 58% and a stretch ratio of 1.45, the second-stage stretching bath had a DMSO mass concentration of 33% and a stretch ratio of 3, and a total stretch ratio in the first-stage stretching bath and the second-stage stretching bath was 4.35. A spinning speed was 45 m/min, a hot stretching temperature was 390°C, and a stretch ratio was 1.8.

### Example 5

(1) p-phenylenediamine was added to NMP to obtain a first mixture, nitrogen was introduced for protection, and the first mixture was stirred for 1 h at a dissolution temperature of 60°C. 2,6-diaminopyridine was added to obtain a second mixture, and the second mixture was stirred for dissolution. Then furandicarbonyl chloride was added in three batches to allow a reaction at 4°C to obtain a reaction system, where the p-phenylenediamine, the 2,6-diaminopyridine, and the furandicarbonyl chloride were in a molar ratio of 1 :0.9:2.47.
   A pH of the reaction system was adjusted with calcium hydroxide to 9.7 to obtain a bio-based polyamide polymer solution with a solid content of 22% and a viscosity of 917 Po (25°C).
(2) The bio-based polyamide polymer solution was subjected to wet spinning as follows: a bio-based polyamide polymer was cured, drafted, washed with water, oven-dried, heat-set, crimped, oiled, and cut off to obtain a bio-based polyamide fiber.

A specific process was as follows: A curing bath was an NMP aqueous solution in which a mass concentration of NMP was 70% to 75%. A two-stage stretching bath mode was adopted, where a first-stage stretching bath and a second-stage stretching bath both were an NMP aqueous solution; the first-stage stretching bath had an NMP mass concentration of 59% and a stretch ratio of 1.5, the second-stage stretching bath had an NMP mass concentration of 34% and a stretch ratio of 3, and a total stretch ratio in the first-stage stretching bath and the second-stage stretching bath was 4.5. A spinning speed was 50 m/min, a hot stretching temperature was 400°C, and a stretch ratio was 1.6.

### Example 6

(1) p-phenylenediamine was added to DMAC to obtain a first mixture, nitrogen was introduced for protection, and the first mixture was stirred for 1 h at a dissolution temperature of 60°C. 2,6-diaminopyridine was added to obtain a second mixture, and the second mixture was stirred for dissolution. Then furandicarbonyl chloride was added in three batches to allow a reaction at 5°C to obtain a reaction system, where the p-phenylenediamine, the 2,6-diaminopyridine, and the furandicarbonyl chloride were in a molar ratio of 1:1:1.98.
   A pH of the reaction system was adjusted with calcium hydroxide to 8.5 to obtain a bio-based polyamide polymer solution with a solid content of 23% and a viscosity of 1,023 Po (25°C).
(2) The bio-based polyamide polymer solution was subjected to wet spinning as follows: a bio-based polyamide polymer was cured, drafted, washed with water, oven-dried, heat-set, crimped, oiled, and cut off to obtain a bio-based polyamide fiber.

A specific process was as follows: A curing bath was a DMAC aqueous solution in which a mass concentration of DMAC was 70% to 75%. A two-stage stretching bath mode was adopted, where a first-stage stretching bath and a second-stage stretching bath both were a DMAC aqueous solution; the first-stage stretching bath had a DMAC mass concentration of 60% and a stretch ratio of 1.35, the second-stage stretching bath had a DMAC mass concentration of 35% and a stretch ratio of 3.1, and a total stretch ratio in the first-stage stretching bath and the second-stage stretching bath was 4.185. A spinning speed was 42 m/min, a hot stretching temperature was 385°C, and a stretch ratio was 1.7.

### Example 7

(1) p-phenylenediamine was added to NMP to obtain a first mixture, nitrogen was introduced for protection, and the first mixture was stirred for 1 h at a dissolution temperature of 42°C. 2,3-diaminopyridine was added to obtain a second mixture, and the second mixture was stirred for dissolution. Then furandicarbonyl chloride was added in three batches to allow a reaction at 0°C to obtain a reaction system, where the p-phenylenediamine, the 2,3-diaminopyridine, and the furandicarbonyl chloride were in a molar ratio of 1 :0.5:1.35.
   A pH of the reaction system was adjusted with sodium hydroxide to 8.0 to obtain a bio-based polyamide polymer solution with a solid content of 18% and a viscosity of 902 Po (25°C).
(2) The bio-based polyamide polymer solution was subjected to wet spinning as follows: a bio-based polyamide polymer was cured, drafted, washed with water, oven-dried, heat-set, crimped, oiled, and cut off to obtain a bio-based polyamide fiber.

A specific process was as follows: A curing bath was an NMP aqueous solution in which a mass concentration of NMP was 70% to 75%. A two-stage stretching bath mode was adopted, where a first-stage stretching bath and a second-stage stretching bath both were an NMP aqueous solution; the first-stage stretching bath had an NMP mass concentration of 55% and a stretch ratio of 1.25, the second-stage stretching bath had an NMP mass concentration of 35% and a stretch ratio of 3.04, and a total stretch ratio in the first-stage stretching bath and the second-stage stretching bath was 3.8. A spinning speed was 38 m/min, a hot stretching temperature was 380°C, and a stretch ratio was 1.6.

### Example 8

(1) p-phenylenediamine was added to DMSO to obtain a first mixture, nitrogen was introduced for protection, and the first mixture was stirred for 1 h at a dissolution temperature of 55°C. 2,5-diaminopyridine was added to obtain a second mixture, and the second mixture was stirred for dissolution. Then furandicarbonyl chloride was added in three batches to allow a reaction at 2°C to obtain a reaction system, where the p-phenylenediamine, the 2,5-diaminopyridine, and the furandicarbonyl chloride were in a molar ratio of 1 :0.8:1.8.
   A pH of the reaction system was adjusted with calcium hydroxide to 9.0 to obtain a bio-based polyamide polymer solution with a solid content of 20% and a viscosity of 1,360 Po (25°C).
(2) The bio-based polyamide polymer solution was subjected to wet spinning as follows: a bio-based polyamide polymer was cured, drafted, washed with water, oven-dried, heat-set, crimped, oiled, and cut off to obtain a bio-based polyamide fiber.

A specific process was as follows: A curing bath was a DMSO aqueous solution in which a mass concentration of DMSO was 70% to 75%. A two-stage stretching bath mode was adopted, where a first-stage stretching bath and a second-stage stretching bath both were a DMSO aqueous solution; the first-stage stretching bath had a DMSO mass concentration of 60% and a stretch ratio of 1.4, the second-stage stretching bath had a DMSO mass concentration of 35% and a stretch ratio of 3, and a total stretch ratio in the first-stage stretching bath and the second-stage stretching bath was 4.2. A spinning speed was 40 m/min, a hot stretching temperature was 370°C, and a stretch ratio was 1.7.

### Comparative Example 1

A bio-based polyamide fiber was prepared by the same method as in Example 1, except that: during preparation of a bio-based polyamide polymer solution in the step (1), 2,6-diaminopyridine was not added, and a mole number of the p-phenylenediamine was increased to a total mole number of the 2,6-diaminopyridine and the p-phenylenediamine in Example 1, that is, a molar ratio of the p-phenylenediamine to the furandicarbonyl chloride was 1.5:1.35; an insoluble solid was precipitated during a polymerization reaction; after the polymerization reaction was completed, a product was filtered out, washed, and oven-dried to obtain a polymer; and the polymer was dissolved with 98% concentrated sulfuric acid to obtain a bio-based polyamide polymer solution with a solid content of 11% and a viscosity of 580 Po (25°C).

### Comparative Example 2

A bio-based polyamide fiber was prepared by the same method as in Example 6, except that: during preparation of a bio-based polyamide polymer solution in the step (1), an amount of the 2,6-diaminopyridine was increased, that is, the p-phenylenediamine, the 2,6-diaminopyridine, and the furandicarbonyl chloride were in a molar ratio of 1:1.2:1.98.

### Comparative Example 3

A bio-based polyamide fiber was prepared by the same method as in Example 1, except that: during preparation of a bio-based polyamide polymer solution in the step (1), the furandicarbonyl chloride was replaced with terephthaloyl chloride; a large amount of a polymer was precipitated during a polymerization reaction; after the polymerization reaction was completed, a product was filtered out, washed, and oven-dried to obtain a polymer; and the polymer was dissolved with 98% concentrated sulfuric acid to obtain a bio-based polyamide polymer solution with a solid content of 12% and a viscosity of 534 Po (25°C).

### Comparative Example 4

A bio-based polyamide fiber was prepared by the same method as in Example 1, except that: in the step (2), a one-stage stretching bath mode was adopted, that is, stretching was conducted in a stretching bath with an NMP mass concentration of 55%, and a stretch ratio was 3.96.

### Comparative Example 5

A bio-based polyamide fiber was prepared by the same method as in Example 1, except that: in the step (2), a two-stage stretching bath mode was adopted, where a first-stage stretching bath had an NMP mass concentration of 60%, a second-stage stretching bath had an NMP mass concentration of 30%, and a concentration difference between the first-stage stretching bath and the second-stage stretching bath was 30%, which was greater than the concentration difference limited in the present disclosure.

The polyamide fibers prepared in Examples 1 to 8 and Comparative Examples 1 to 5 each were subjected to performance tests: a strength was determined by a method in GBIT 14337-2008, the flame-retardant performance was determined by a method in GB/T 5454-1997, and dyeing was conducted by a method in GB/T 23976.1-2009.

Performance data of the polyamide fibers prepared in Examples 1 to 8 and Comparative Examples 1 to 5 were shown in Table 1 below:

| **Table 1 Relevant data of Examples 1 to 8 and Comparative Examples 1 to 5** | | | | |
|---|---|---|---|---|
| | Strength (cN/dtex) | Elongation at break (%) | Limiting oxygen index (%) | K/S |
| Example 1 | 18.2 | 10.2 | ≥ 29.5 | 4.3145 |
| Example 2 | 17.5 | 9.2 | ≥ 29.5 | 4.3236 |
| Example 3 | 15.4 | 9.7 | ≥ 29.5 | 4.3423 |
| Example 4 | 19.5 | 10.8 | ≥ 29.5 | 4.3121 |
| Example 5 | 16.5 | 9.5 | ≥ 29.5 | 4.3254 |
| Example 6 | 17.4 | 9.4 | ≥ 29.5 | 4.3192 |
| Example 7 | 18.2 | 10.2 | ≥ 29.5 | 4.3025 |
| Example 8 | 19.1 | 10.4 | ≥ 29.5 | 4.3101 |
| Comparative Example 1 | 10.6 | 10.6 | ≥ 29.5 | 3.1211 |
| Comparative Example 2 | 5.4 | 13.9 | ≥ 29.5 | 4.1023 |
| Comparative Example 3 | 12.5 | 8.1 | ≥ 29.5 | 2.1242 |
| Comparative Example 4 | 8.5 | 14.9 | ≥ 29.5 | 3.1189 |
| Comparative Example 5 | 7.4 | 8.9 | ≥ 29.5 | 3.7459 |
| Aramid 1313 | 4.7 | 18.6 | ≥ 29.5 | 2.3727 |

Notes: In Table 1, the aramid 1313 refers to a meta-aramid fiber of Tametar; the K/S value refers to a ratio of a pigment absorption coefficient k to a pigment scattering coefficient s, and is usually used to indicate a color shade of a surface of a solid sample, namely, a concentration of a colored substance; and the larger the K/S value, the better the dyeing performance of a dye.

It can be seen from the experimental data of Examples 1 to 8 that the technical solution of the present disclosure can be used in combination with a wet-spinning process adopting a two-stage stretching bath mode to prepare a bio-based polyamide fiber product with a high strength, excellent dyeing performance, and intrinsic flame-retardant performance.

It can be seen from comparison of data of Example 1 and Comparative Example 1 that the heterocyclic diamine monomer used in the technical solution of the present disclosure is conducive to improving a solid content in a bio-based polyamide polymer solution, where a solid content of a bio-based polyamide polymer solution obtained without the heterocyclic diamine is as high as 11% (Comparative Example 1), and a solid content of a bio-based polyamide polymer solution obtained with the heterocyclic diamine can reach 17% to 34% (Examples 1 to 8). The addition of the heterocyclic diamine can change the flexibility of a molecular chain and improve the solubility of a polymer. In addition, a bio-based polyamide polymer obtained with the heterocyclic diamine in the method of present disclosure can greatly improve a strength of a fiber.

It can be seen from comparison of data of Example 6 and Comparative Example 2 that, if an amount of the heterocyclic diamine is increased, a strength of a bio-based polyamide fiber will be greatly decreased. This is because the introduction of a too-large amount of the heterocyclic diamine will cause a decline in rigidity of a molecular chain, thereby resulting in a poor strength of a fiber. Therefore, the amount of the heterocyclic diamine defined in the present disclosure is conducive to acquisition of a high-quality bio-based polyamide fiber.

It can be seen from comparison of data of Example 1 and Comparative Example 3 that, if another acyl chloride (terephthaloyl chloride) is used instead of the furandicarbonyl chloride of the present disclosure, the dyeing performance of a polyamide fiber will be decreased, and a strength will also be decreased. This is because the addition of a large amount of terephthaloyl chloride can increase the rigidity of a molecular chain, decrease the flexibility of a molecular chain, and increase the crystallinity. In addition, a polymer can only be dissolved in 98% concentrated sulfuric acid, resulting in a decreased solid content of a polymer solution, a low fiber strength, and poor dyeing performance. It can be seen from data of Example 1 and Comparative Examples 1 and 3 that, during preparation of a bio-based polyamide fiber, the heterocyclic diamine and the furandicarbonyl chloride play a synergistic role, which is conducive to preparation of a fiber product with a high strength and excellent dyeing performance in coordination with the preparation method of the present disclosure.

It can be seen from comparison of data of Example 1 and Comparative Example 4 that: during preparation of a bio-based polyamide polymer, if a one-stage stretching bath mode is adopted, a strength of a fiber product will be reduced. This is because a release rate of a solvent in a fiber during the preparation cannot be controlled, which causes a poor density inside the fiber and ultimately affects a strength of the fiber.

It can be seen from comparison of data of Example 1 and Comparative Example 5 that, if a concentration difference between the first-stage stretching bath and the second-stage stretching bath is too large, it is not conducive to the control of a release rate of a solvent in a fiber, which leads to the formation of a skin-core structure of the fiber and the production of a large number of pores inside the fiber and ultimately causes a decline of a strength of the fiber.

The technical features of the above examples can be arbitrarily combined. For brevity of description, not all possible combinations of the technical features of the above examples are described. However, the combinations of the technical features should be construed as falling within the scope described in this specification as long as there is no contradiction in the combinations.

It should be noted that those of ordinary skill in the art can further make several variations and modifications without departing from the inventive concept of the present disclosure, and such variations and modifications all fall within the claimed scope of the present disclosure. The protection scope of the present disclosure shall be subject to the protection scope defined by the claims.

## Claims

1. A method for preparing a bio-based polyamide fiber, comprising:
S1: under protection of an inert gas, dissolving p-phenylenediamine and a heterocyclic diamine in a polar solvent, adding furandicarbonyl chloride to allow a polymerization reaction to obtain a polymerization system, and adjusting a pH of the polymerization system to slightly higher than 7.0 to obtain a bio-based polyamide polymer solution,
wherein the heterocyclic diamine is at least one selected from a group consisting of 2,3-diaminopyridine, 2,5-diaminopyridine, and 2,6-diaminopyridine; and a molar ratio of the p-phenylenediamine to the heterocyclic diamine is 1:(0.5-1); and
S2: subjecting the bio-based polyamide polymer solution to wet spinning to obtain the bio-based polyamide fiber,
wherein the wet spinning adopts a two-stage stretching bath mode; stretch ratios in a first-stage stretching bath and a second-stage stretching bath are 1.2 to 1.5 and 3.0 to 3.3, respectively, and a total stretch ratio in the first-stage stretching bath and the second-stage stretching bath is 3.8 to 4.5;
the first-stage stretching bath and the second-stage stretching bath both are a polar solvent-containing aqueous solution; the first-stage stretching bath is a polar solvent-containing aqueous solution with a mass concentration of 55% to 60%, and the second-stage stretching bath is a polar solvent-containing aqueous solution with a mass concentration of 30% to 35%; and a concentration difference between the first-stage stretching bath and the second-stage stretching bath is 20% to 25%.

2. The method according to claim 1, wherein the polar solvent is selected from a group consisting of N,N-dimethylformamide (DMF), N,N-dimethylacetamide (DMAC), N-methylpyrrolidone (NMP), and dimethyl sulfoxide (DMSO).

3. The method according to claim 1, wherein a ratio of a total mole number of the p-phenylenediamine and the heterocyclic diamine to a mole number of the furandicarbonyl chloride is 1:(0.9-1.3).

4. The method according to claim 1, wherein when the p-phenylenediamine and the heterocyclic diamine are dissolved in the polar solvent, a dissolution temperature is controlled at 40°C to 60°C; and the polymerization reaction is conducted at 0°C to 5°C.

5. The method according to claim 1, wherein the bio-based polyamide polymer solution has a polymer concentration of 17 wt% to 34 wt%, a viscosity of 800 Po to 1,500 Po, and a pH of 8 to 10.

6. The method according to claim 1, wherein during the wet spinning, a spinning speed is 35 m/min to 50 m/min, a hot stretching temperature is 360°C to 400°C, and a stretch ratio is 1.5 to 1.8.

7. A bio-based polyamide fiber prepared by the method according to any one of claims 1 to 6, wherein when the heterocyclic diamine is 2,6-diaminopyridine, a polymer in the bio-based polyamide fiber has a general structural formula of 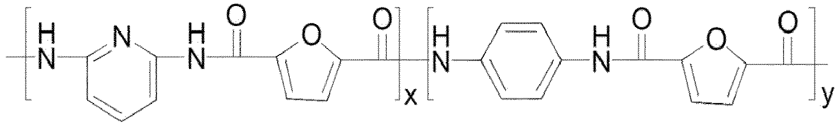 wherein 140 ≤ x ≤ 200 and 280 ≤ y ≤ 350; and the polymer has a total molecular weight of 110,000 to 150,000 and a molecular weight distribution of 1.1 to 1.3.

8. The bio-based polyamide fiber according to claim 7, wherein the bio-based polyamide fiber has a tensile strength of 15 cN/dtex to 20 cN/dtex, an elongation at break of 9% to 11%, and a filament number of 2.0 dtex to 2.5 dtex.
